# EUROPEAN PATENT APPLICATION

(11) **EP 2 509 356 A1**
(43) Date of publication of application: **10.10.2012**
(21) Application number: 11360014.2
(22) Date of filing: 04.04.2011
(51) Int. Cl.: H04W 28/06, H04W 52/54

(54) **Omission of control parameters transmission to reduce overhead.**

(71) Applicant: Alcatel Lucent, 75007 Paris (FR)
(72) Inventor: Worrall, Chandrika K., Newbury, Berkshire, RG14 6SN (GB)
(74) Representative: Leppard, Andrew John

(57) **Abstract**

A method of encoding wireless telecommunications network control parameters in a control message, a method of decoding wireless telecommunications network control parameters in a control message, network nodes and computer program products are disclosed. The method of encoding wireless telecommunication network control parameters in a control message for transmission from a first network node to a second network node, said control message containing a plurality of configuration reports, each configuration report containing at least one control parameter, comprises the steps of: determining that a second configuration report containing a second control parameter can be used by said second network node to derive a first control parameter of a first configuration report; omitting inclusion of said first control parameter in said first configuration report; and encoding an indication in said first configuration report for said second network node to derive said first control parameter from said second control parameter. In this way, rather than having to include the control parameter within the control message, information is instead provided to the network node to enable the removed control parameter to be determined from another control parameter. This approach reduces the amount of information needed to be transmitted in the control message which reduces the bandwidth and resource overhead required to transmit and process the control message.

## Description

### FIELD OF INVENTION

The present invention relates to a method of encoding wireless telecommunications network control parameters in a control message, a method of decoding wireless telecommunications network control parameters in a control message, network nodes and computer program products.

### BACKGROUND

Control messages used for the transmission of control parameters or other control OR configuration information between network nodes of a wireless telecommunications system are known. Such control messages typically contain configuration data reporting the configuration of network nodes or controlling the configuration of those network nodes. Such configuration data is used by network nodes to help ensure that the wireless telecommunications network operates correctly and provides the required support and coverage to user equipment.

Although techniques exist for providing control messages, these have their own shortcomings.

Accordingly, it is desired to provide an improved technique for providing control messages.

### SUMMARY

According to a first aspect, there is provided a method of encoding wireless telecommunication network control parameters in a control message for transmission from a first network node to a second network node, the control message containing a plurality of configuration reports, each configuration report containing at least one control parameter, the method comprising the steps of: determining that a second configuration report containing a second control parameter can be used by the second network node to derive a first control parameter of a first configuration report; omitting inclusion of the first control parameter in the first configuration report; and encoding an indication in the first configuration report for the second network node to derive the first control parameter from the second control parameter.

The first aspect recognises that a problem with some existing control messages is that redundant information may be encoded within the control message which increases the bandwidth and resource overhead required to support transmission of such messages.

Accordingly, a method of encoding a control message for transmission between network nodes is provided. The control message may contain a number of configuration reports. Each configuration report may contain a number of control parameters or configuration data. A determination may be made of whether a configuration report containing a control parameter can be used to derive another control parameter of another configuration report. If it is determined that the control parameter can be derived or determined from the other control parameter, then the control parameter may not be encoded in the configuration report. An indication may then be encoded in the configuration report to inform the network node to determine the control parameter from the other control parameter. In this way, rather than having to include the control parameter within the control message, information is instead provided to the network node to enable the removed control parameter to be determined from another control parameter. This approach reduces the amount of information needed to be transmitted in the control message which reduces the bandwidth and resource overhead required to transmit and process the control message.

In one embodiment, the step of determining comprises determining that the second control parameter is the same as the first control parameter; and the step of encoding comprises encoding an indication in the second configuration report for the second network node to use the second control parameter as the first control parameter. Accordingly, where the second control parameter is substantially identical to the first control parameter, then the indication may indicate to or be interpreted by the second network node to utilise the second control parameter also as the first control parameter. It will be appreciated that such direct utilisation will require very little processing on the part of the second network node.

In one embodiment, the step of determining comprises determining that the second control parameter is derivable from parameters available to the second network node; the step of omitting comprises omitting inclusion of the second control parameter in the second configuration report; and the step of encoding comprises encoding an indication in the second configuration report for the second network node to derive the second control parameter from the parameters available to the second network node. Accordingly, the indication may indicate to or be interpreted by the second network node that it has parameters available which may be used to determine or calculate the second control parameter. Accordingly, the second control parameter may also be omitted from the control message which further reduces the amount of information which needs to be transmitted in the control message and reduces transmission and resource overheads. The second network node may then determine or calculate the second control parameter using those existing known parameters available to it. The second configuration parameter may then also be used as the first configuration parameter.

In one embodiment, the step of determining comprises determining that the second control parameter is derivable from parameters of a previously provided control message; the step of omitting comprises omitting inclusion of the second control parameter in the second configuration report; and the step of encoding comprises encoding an indication in the second configuration report for the second network node to derive the second control parameter from the parameters of the previously provided control message. Accordingly, rather than calculating the second control parameter, a second control parameter which may have been provided previously may instead be utilised as the second control parameter. The indication may indicate to or be interpreted by the second network node to use such previously provided control parameters. This again reduces the amount of information that needs to be included in the control message and reduces transmission and resource overheads. It will be appreciated that in a reasonably static network, a previously provided control parameter may well still closely approximate the corresponding current control parameter.

In one embodiment, the control message comprises a PHR MAC control element, the first configuration report comprises a Type 2 PHR report containing a first PHR parameter and a first Pcmax parameter and the second configuration report comprises a Type 1 PHR report containing a second PHR parameter and a second Pcmax parameter, the step of determining comprises determining that the Type 1 PHR report contains an indication of the second Pcmax parameter which can be used to derive the first Pcmax parameter, the step of omitting comprises omitting the first Pcmax parameter from the Type 2 PHR report, and the step of encoding comprises encoding a bit field of the Type 2 PHR report to indicate to the second network node to derive the first Pcmax parameter from the second Pcmax parameter. Accordingly, the control message may comprise a power headroom report (PHR) medium access control (MAC) control element. Such control elements comprise a number of PHR reports. Such reports may be a Type 1 PHR report or a Type 2 PHR report. Each type of report may contain a PHR parameter and a P_{CMAX} parameter. When it is determined that the P_{CMAX} parameter of a Type 1 report can be used to derive the P_{CMAX} parameter of a Type 2 report, then the P_{CMAX} parameter of the Type 2 report may be omitted and an indication may be given in, for example, the associated virtual (V) field which indicates to or be interpreted by the second network node that the P_{CMAX} parameter derived from the Type 1 report should be used as the P_{CMAX} parameter for the Type 2 report.

In one embodiment, the step of determining comprises determining that the Type 1 PHR report contains the second P_{CMAX} parameter which the same as the first P_{CMAX} parameter, and the step of encoding comprises encoding a bit field of the Type 2 PHR report to indicate to the second network node to use the second P_{CMAX} parameter as the first P_{CMAX} parameter. Accordingly, the V field of the Type 2 report may indicate to or be interpreted by the second network node to use the P_{CMAX} parameter of the Type 1 report as the P_{CMAX} parameter for the Type 2 report. Furthermore, if the V field of the Type 1 report indicates that the P_{CMAX} parameter is present in the Type 1 report, then this may be used directly.

In one embodiment, the step of determining comprises determining that the Type 1 PHR report contains an indication that the second P_{CMAX} parameter is derivable from parameters available to the second network node, the step of omitting comprises omitting the second P_{CMAX} parameter from the Type 1 PHR report, and the step of encoding comprises encoding a bit field of the Type 1 PHR report to indicate to the second network node to derive the second P_{CMAX} parameter from the parameters available to the second network node. Accordingly, when the indicator such as the V field associated with the Type 1 report indicates that the P_{CMAX} parameter of the Type 1 report should be derived, then the second P_{CMAX} parameter may be omitted and the indicator such as the V field will indicate to or be interpreted by the second network node that the second P_{CMAX} parameter should be calculated using parameters available to the second network node.

In one embodiment, the step of determining comprises determining that the second P_{CMAX} parameter is derivable from parameters of a previously provided PHR MAC control element; the step of omitting comprises omitting inclusion of the second P_{CMAX} parameter in the Type 1 PHR report; and the step of encoding comprises encoding an indication in the Type 1 PHR report for the second network node to derive the second P_{CMAX} parameter from the parameters of the previously provided PHR MAC control element. Accordingly, when the second P_{CMAX} parameter is derivable from previous control elements then the P_{CMAX} parameter may be omitted and the indicator such as the V field of the report may indicate to or be interpreted by the second network node to use parameters of a previously provided control element.

According to a second aspect, there is provided a computer program product operable, when executed on a computer, to perform the method steps of the first aspect.

According to a third aspect, there is provided a network node operable to encode wireless telecommunication network control parameters in a control message for transmission to another network node, the control message containing a plurality of configuration reports, each configuration report containing at least one control parameter, the network node comprising: determining logic operable to determine that a second configuration report containing a second control parameter can be used by the another network node to derive a first control parameter of a first configuration report; encoding logic operable to omit inclusion of the first control parameter in the first configuration report and to encode an indication in the first configuration report for the another network node to derive the first control parameter from the second control parameter.

In one embodiment, the determining logic is operable to determine that the second control parameter is the same as the first control parameter and the encoding logic is operable to encode an indication in the second configuration report for the another network node to use the second control parameter as the first control parameter.

In one embodiment, the determining logic is operable to determine that the second control parameter is derivable from parameters available to the another network node and the encoding logic is operable to omit inclusion of the second control parameter in the second configuration report and to encode an indication in the second configuration report for the another network node to derive the second control parameter from the parameters available to the another network node.

In one embodiment, the determining logic is operable to determine that the second control parameter is derivable from parameters of a previously provided control message and the encoding logic is operable to omit inclusion of the second control parameter in the second configuration report and to encode an indication in the second configuration report for the another network node to derive the second control parameter from the parameters of the previously provided control message.

In one embodiment, the control message comprises a PHR MAC control element, the first configuration report comprises a Type 2 PHR report containing a first PHR parameter and a first P_{CMAX} parameter and the second configuration report comprises a Type 1 PHR report containing a second PHR parameter and a second P_{CMAX} parameter, the determining logic is operable to determine that the Type 1 PHR report contains an indication of the second P_{CMAX} parameter which can be used to derive the first P_{CMAX} parameter, and the encoding logic is operable to omit the first P_{CMAX} parameter from the Type 2 PHR report and to encode a bit field of the Type 2 PHR report to indicate to the another network to derive the first P_{CMAX} parameter from the second P_{CMAX} parameter.

In one embodiment, the determining logic is operable to determine that the Type 1 PHR report contains the second P_{CMAX} parameter which the same as the first P_{CMAX} parameter, and the encoding logic is operable to encode a bit field of the Type 2 PHR report to indicate to the another network node to use the second P_{CMAX} parameter as the first P_{CMAX} parameter.

In one embodiment, the determining logic is operable to determine that the Type 1 PHR report contains an indication that the second P_{CMAX} parameter is derivable from parameters available to the second network node, and the encoding logic is operable to encode a bit field of the Type 1 PHR report to indicate to the another network node to derive the second P_{CMAX} parameter from the parameters available to the another network node.

In one embodiment, the determining logic is operable to determine that the second P_{CMAX} parameter is derivable from parameters of a previously provided PHR MAC control element, and the encoding logic is operable to omit inclusion of the second P_{CMAX} parameter in the Type 1 PHR report, and to encode an indication in the Type 1 PHR report for the another network node to derive the second P_{CMAX} parameter from the parameters of the previously provided PHR MAC control element.

In one embodiment, the network node comprises user equipment and the another network node comprises a base station.

According to a fourth aspect, there is provided a method of decoding wireless telecommunication network control parameters in a control message received at a second network node from a first network node, the control message containing a plurality of configuration reports, each configuration report containing at least one control parameter, the method comprising the steps of: decoding an indication in a first configuration report of the control message to derive a first control parameter from a second control parameter of a second configuration report of the control message; and deriving the first control parameter from the second control parameter.

In one embodiment, the step of deriving comprises using the second control parameter as the first control parameter.

In one embodiment, the step of deriving comprises deriving the second control parameter from parameters available to the second network node.

In one embodiment, the step of deriving comprises deriving the second control parameter from parameters of a previously provided control message.

In one embodiment, the control message comprises a PHR MAC control element, the first configuration report comprises a Type 2 PHR report containing at least one of a first PHR parameter and a first P_{CMAX} parameter and the second configuration report comprises a Type 1 PHR report containing at least one of a second PHR parameter and a second P_{CMAX} parameter, and the step of deriving comprises deriving the first P_{CMAX} parameter from the second P_{CMAX} parameter.

In one embodiment, the step of deriving comprises using the second P_{CMAX} parameter as the first P_{CMAX} parameter.

In one embodiment, the step of deriving comprises deriving the second P_{CMAX} parameter from parameters available to the second network node.

In one embodiment, the step of deriving comprises deriving the second P_{CMAX} parameter from parameters of a previously provided PHR MAC control element.

According to a fifth aspect, there is provided a computer program product operable, when executed on a computer, to perform the method steps of the fourth aspect.

According to a sixth aspect, there is provided a network node operable to decode wireless telecommunication network control parameters in a control message received from another network node, the control message containing a plurality of configuration reports, each configuration report containing at least one control parameter, the network node comprising: decoding logic operable to decode an indication in a first configuration report of the control message to derive a first control parameter from a second control parameter of a second configuration report of the control message; and deriving logic operable to derive the first control parameter from the second control parameter.

In one embodiment, the deriving logic is operable to use the second control parameter as the first control parameter.

In one embodiment, the deriving logic is operable to derive the second control parameter from parameters available to the another network node.

In one embodiment, deriving logic is operable to derive the second control parameter from parameters of a previously provided control message.

In one embodiment, the control message comprises a PHR MAC control element, the first configuration report comprises a Type 2 PHR report containing at least one of a first PHR parameter and a first P_{CMAX} parameter and the second configuration report comprises a Type 1 PHR report containing at least one of a second PHR parameter and a second P_{CMAX} parameter, and the deriving logic is operable to derive the first P_{CMAX} parameter from the second P_{CMAX} parameter.

In one embodiment, the deriving logic is operable to use the second P_{CMAX} parameter as the first P_{CMAX} parameter.

In one embodiment, the deriving logic is operable to derive the second P_{CMAX} parameter from parameters available to the another network node.

In one embodiment, the deriving logic is operable to derive the second P_{CMAX} parameter from parameters of a previously provided PHR MAC control element.

In one embodiment, the network node comprises a base station and the another network node comprises user equipment.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates schematically power configuration parameters according to one embodiment;
Figure 2 illustrates components of an extended PHR MAC control element;
Figure 3 illustrates components of a modified extended PHR MAC control element according to one embodiment; and
Figure 4 illustrates components of another modified extended PHR MAC control element according to one embodiment.

### DESCRIPTION OF THE EMBODIMENTS

### Overview

Before discussing embodiments in detail, an overview will first be provided. Embodiments provide a technique where one or more control parameters which would previously have been included in a control message are omitted from that control message because the recipient of that control message is able to derive, determine or establish what the omitted control parameter is, based on other information. That indication is encoded in the control message to inform or to be interpreted by the recipient to derive the missing control parameter.

For example, the recipient may determine from the received control message that another control parameter provided within the control message should also be used for the missing control parameter. Likewise, the recipient may determine from the control message that a control parameter should be derived from information already available to the recipient and that the derived control parameter should also be used as the missing control parameter.

In both circumstances, the control parameters themselves may then be omitted from the control message which reduces transmission and other resource overheads.

### LTE-A Example

One particular implementation of this technique will now be illustrated with reference to power headroom reporting in a Long Term Evolution Advanced (LTE-A) environment.

Embodiments relate to uplink (UL) power headroom (PH) reporting for carrier aggregation in wireless communications, particularly in relation to LTE-A. Power headroom is the difference between a user equipment's (UE) maximum transmit power and the estimated power for a physical UL shared channel (PUSCH) transmission in the current subframe. A power headroom report (PHR) is an index reported by the UE to indicate the estimated PH. The UE sends the PHR to an evolved Node B (eNB), which may use the PHR to determine how much more UL bandwidth per subframe the UE is capable of using.

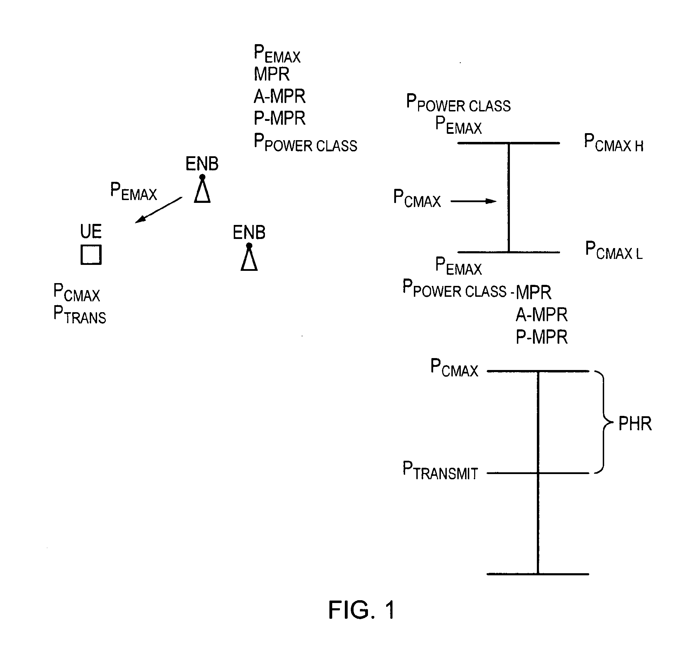

As shown in Figure 1, a plurality of eNodeBs (eNB) may be provided. Ppowerclass, which is the maximum transmission power for the user equipment (UE), may be set to, for example, 23 dBm to reduce user equipment interference. Likewise, the eNB may set a parameter known as P_{EMAX} which reduces inter-eNB interference.

Furthermore, the eNB may set further parameters such as maximum power reduction (MPR), additional maximum power reduction (A-MPR) and P-MPR. The UE is then free to use these parameters to set its configured transmission power P_{CMAX}.

Accordingly, it can be seen that the eNB is aware of many control parameters relating to the power configuration of the UE.

As shown in Figure 1, the UE selects P_{CMAX} to fall within an upper threshold P_{CMAX-H} and a lower threshold P_{CMAX-L}. P_{CMAX-H} is set to be no more than Ppowerclass or P_{EMAX}. The lower threshold P_{CMAX-L} is set to be no more than P_{EMAX} or Ppowerclass less MPR, A-MPR, P-MPR.

However, the setting of P_{CMAX} by the UE is not standardised in order to give the UE flexibility to select this value. Once the value of P_{CMAX} has been determined then the difference between this and the actual transmit power Pₜᵣₐₙₛₘᵢₜ indicates the power headroom PHR which indicates the power status of the UE.

Because the UE is able to determine P_{CMAX} and will know the value of Pₜᵣₐₙₛₘᵢₜ for scheduled transmissions, it will know the value of P_{CMAX} and PHR but these will not be known to the network. Accordingly, the value of P_{CMAX} and PHR needs to be reported by the UE to the network and, in particular, to the eNB.

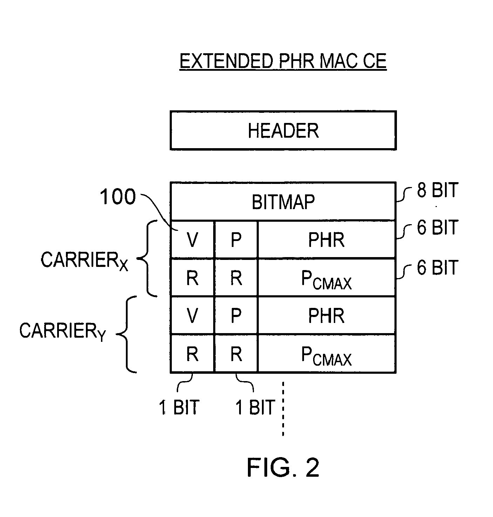

Accordingly, Figure 2 shows an extended PHR MAC control element used to transmit the values of PHR and P_{CMAX} for each carrier to the network. A header portion is provided which will not be described in more detail but will be well known to the skilled person. A 1 byte bitmap is provided which indicates those carriers for which these parameters are being provided. As can be seen, a 6 bit PHR and a 6 bit P_{CMAX} is provided for each carrier. However, because not all of the carriers may be concurrently scheduled, and because P_{CMAX-L} depends on scheduling, the range for setting P_{CMAX} narrows and can only be either Ppowerclass or P_{EMAX}, both of which are known by the network.

Also, because the PHR is based on scheduling information, it is not possible to determine what the PHR may be, since the carrier is not currently scheduled. In this case, a reference format is used where MPR, A-MPR, P-MPR are set to zero and other parameters are assumed and a virtual PHR is calculated. The presence of a virtual PHR is indicated by the setting of the virtual bit 100. In the case that a virtual PHR has been calculated, then the network is able to determine P_{CMAX} since this can only be either P_{EMAX} or Ppowerclass.

Accordingly, when the virtual bit 100 is set, then P_{CMAX} may be omitted from the extended PHR MAC control element for that carrier.

It will be appreciated that it is still necessary to transmit the PHR since this is also based on the downlink path loss and this is not known to the network.

In LTE-A it is possible to provision simultaneous transmission on PUCCH and PUSCH on the primary cell (P Cell). In this situation, a Type 1 PHR and a Type 2 PHR are included in the extended PHR MAC control element.

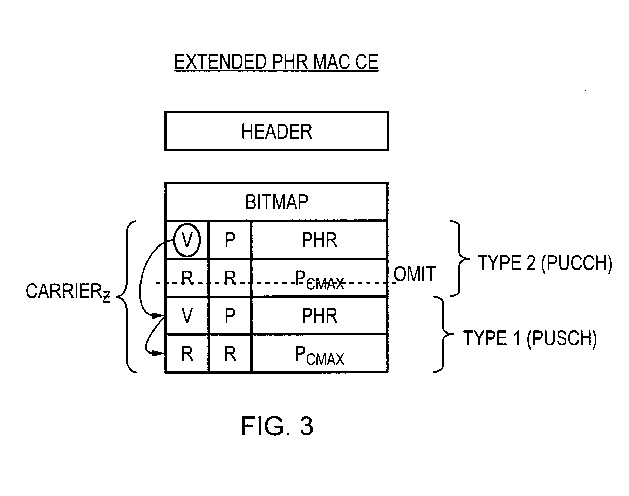

The Type 1 PHR relates to PUSCH, whilst the Type 2 PHR relates to PUCCH. When this occurs, the extended PHR MAC control element is arranged so that the Type 2 PHR is transmitted first, followed by the Type 1 PHR, as illustrated in Figure 3. However, the situation can arise where no transmission occurs on PUCCH but transmissions continue on PUSCH. In those situations, it is not possible for the network to calculate the PHR because the parameters necessary are not known to the network and so it would be necessary to transmit P_{CMAX} for the Type 2 PHR for PUCCH. However, embodiments recognise that the value of P_{CMAX} for the Type 2 report for PUCCH will be the same as the value of P_{CMAX} transmitted in the Type 1 report for PUSCH since they are transmitted within the same frequency band.

Accordingly, rather than transmitting P_{CMAX} for the Type 2 report for PUCCH, the virtual bit may instead be set and the setting of the virtual bit informs the network in these circumstances to look at P_{CMAX} for the associated Type 1 PHR for PUSCH.

By setting the V bit in the Type 2 PHR for PUCCH indicates that the P_{CMAX} parameter has been omitted from this report and that the omitted P_{CMAX} value is the same as the P_{CMAX} value for the corresponding Type 1 report for PUSCH.

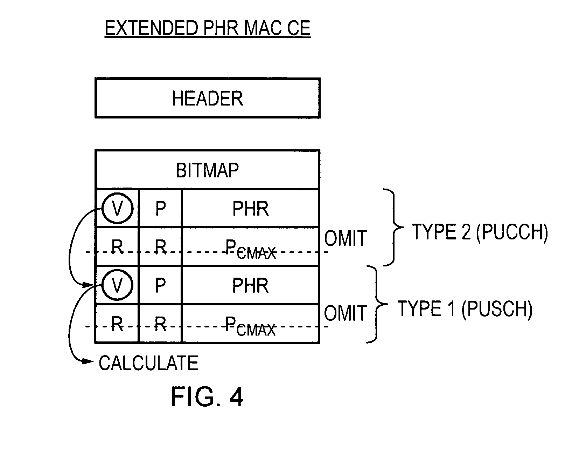

As shown in Figure 4, should the virtual field also be set for the Type 1 report for PUSCH then this will indicate that P_{CMAX} for the Type 1 PHR has also been omitted and instead should be calculated by the network. The calculated P_{CMAX} for PUSCH can then be used as the P_{CMAX} for PUCCH.

It will be appreciated that the network will be fully able to interpret the contents of the extended PHR MAC control element since it will know whether the control element contains Type 2 as well as Type 1 reports.

As mentioned above, there are several types of PH information. Wideband PH (WB-PHR) includes one WB-PHR for all carriers with a valid uplink (UL) scheduling grant in the current transmission time interval (TTI) or one WB-PHR for all carriers without a valid UL scheduling grant in the current TTI.

As also mentioned above, previously, for both virtual Type 1 and Type 2 PH, the configured maximum allowed UE transmit power (P_{CMAX,C}) was not transmitted in the PHR. This was based on the assumption that power management related backoff, P-MPR, setting for virtual PH/P_{CMAX,C} calculation could be set to zero. As such, the value of maximum power reduction (MPR), A-MPR and P-MPR would be known by the network for a virtual PH calculation and so the corresponding P_{CMAX,C} can therefore be calculated by the network.

However when user equipment transmits on PUSCH without the Physical Uplink Control Channel (PUCCH) the MPR, A-MPR and P-MPR settings should be set according to the current PUSCH transmission for Type 2 PH calculation. Therefore, the corresponding P_{CMAX,C} depends on the MPR A-MPR and P-MPR setting for PUSCH and this is not known at the eNB.

There needs to be, therefore, a mechanism such that P_{CMAX,C} which is used for the calculation of virtual Type 2 PH can be provided to the network.

Previously, the MAC Control element format did not provide a mechanism for transmitting a corresponding P_{CMAX,C} for Type 2 PH when there is no actual PUCCH transmission in the given TTI. One approach would be to transmit the corresponding P_{CMAX,C} for Type 2 PH always regardless of whether real PUCCH transmission occur on the corresponding TTI or not. However this requires transmitting a 1 byte field unnecessarily and thus results in uplink resource wastage.

Analysis shows that the corresponding P_{CMAX,C} for Type 2 PH when there is no PUCCH transmission is performed in the corresponding TTI (hence Type 2 PH is calculated based on reference format and reference values) equals P_{CMAX,C} of the Type 1 PH on the primary cell (Pcell).

Embodiments provide for optimized signalling indicating that the P_{CMAX,C} corresponding to Type 2 PH equals that for Type 1 PH. This approach reuses an already allocated field in the MAC control element and therefore no modification is required to the MAC control element format. The description of the specific field is modified to indicate that the corresponding P_{CMAX,C} for Type 2 PH equals that of Type 1 PH.

For Type 1 PHR reporting:
- When UE transmits PUSCH, MPR, A-MPR and the power management related back-off factor are assumed to be the value corresponding to the current PUSCH transmission.
- When UE does not transmit PUSCH regardless of PUCCH transmission MPR, A-MPR and the power management related back-off factor are assumed to be zero.

For Type 2 PHR reporting:
- When UE transmits both PUSCH and PUCCH, MPR, A-MPR and the power management related back-off factor are assumed to be the value corresponding to the current PUSCH and PUCCH transmission.
- When UE transmits PUSCH without PUCCH, MPR, A-MPR and the power management related back-off factor are assumed to be the value corresponding to the current PUSCH transmission.
- When UE transmit PUCCH without PUSCH, MPR, A-MPR and the power management related back-off factor are assumed to be the value corresponding to the current PUCCH transmission.
- When UE does not transmit PUCCH or PUSCH, MPR, A-MPR and the power management related back-off factor are assumed to be zero.

As mentioned above, P_{CMAX,C} is set by the UE within a value bounded by P_{CMAX_L} <= P_{CMAX,C} <= P_{CMAX_H}, where P_{CMAX_L} = Min {P_{EMAX} -ΔTC, Ppowerclass -MPR-A-MPR -ΔTC}; P_{CMAX_H} = Min {P_{EMAX}, Ppowerclass}.

P_{EMAX} is a value signalled by the network in system information and depends on the interference co-ordination mechanism used by the network.

Ppowerclass is the maximum UE power specified.

MPR depends on the modulation and transmit bandwidth configuration (resource block) while A-MPR (Additional Maximum Power reduction) defines the value based on the spectrum emission requirements. Both MPR and A-MPR value range are specified by a standard. Additionally, the value of ΔTC depends on the transmission bandwidth and specified in the standard.

The previous standard confirms that MPR, A-MPR, ΔTC and P-MPR are set to 0 dB for a virtual Type 1 PHR calculation. P_{CMAX,C} corresponding to a Type 1 PH on a carrier which doesn't have an actual PUSCH transmission is therefore either be set to P_{EMAX}, or value defined by the power class (both parameters are known to the network). Thus P_{CMAX,C} for virtual Type 1 PH doesn't provide any additional information to the network.

There is no ambiguity on P_{CMAX,C} for Type 2 PH if PUCCH is transmitted in the given TTI, i.e. Type 2 PH and the corresponding P_{CMAX,C} are calculated based on the actual PUCCH transmission. However, when there is no PUCCH transmission, the corresponding P_{CMAX,C} value depends on the PUSCH transmission.
1. When the UE transmits PUSCH without PUCCH, MPR, A-MPR and the power management related back-off factor are assumed to be the value corresponding to the current PUSCH transmission.
2. When the UE does not transmit PUCCH or PUSCH, MPR, A-MPR and the power management related back-off factor are assumed to be zero.

P_{EMAX,C} is defined per carrier while PPowerclass is defined per UE. P_{EMAX,C} and PPowerclass are the same for P_{CMAX,C} calculation for Type 1 and Type 2 PH on the PCell.

The previous standard defines the Type 1 and Type 2 PH considering the PUSCH and PUCCH transmission respectively. Given that PUCCH is only configured on PCell, Type 2 PH is transmitted only for PCell while Type 1 PH is transmitted per Cell.

In the first case, the corresponding P_{CMAX,C} for Type 2 PH equals the P_{CMAX,C} of the Type 1 PH. In the second case, P_{CMAX}, corresponding to the Type 1 PH is not transmitted as the value is known to the network. The corresponding P_{CMAX,C} for Type 2 PH also equals the value corresponding to Type 1 PH in case 2. This concludes that P_{CMAX,C} corresponding to virtual Type 2 PH equals the P_{CMAX,C} of Type 1 PH irrespective of whether there is PUSCH transmission or not on the PCell, i.e. when the UE does not transmit PUCCH, P_{CMAX,C} corresponding to Type 2 PH equals that of Type 1 PH on PCell. According to the previous arrangement, if the virtual indicator field, V, takes value of "1", this indicates that the associated P_{CMAX,C} byte is omitted for both Type 1 and Type 2 PH.

However, the description of "V" field is modified such that for Type 2 PH, V=1 indicates that the corresponding P_{CMAX,C} equals that of Type 1 PH for PCell.

This would require the following changes to 3GPP TS36.321 as indicated below:

### 6.1.3.6a Extended Power Headroom MAC Control Element

The Extended Power Headroom MAC control element is identified by a MAC PDU subheader with LCID as specified in table 6.2.1-2. It has a variable size and is defined in Figure 6.1.3.6a-1 for the case when only Type 1 PH is reported for the PCell and in Figure 6.1.3.6a-2 for the case when both Type 1 and Type 2 PH are reported for the PCell. The octet containing the Type 2 PH field (if reported) is included first after the MAC subheader and followed by an octet containing the associated PCMAX,c value (if reported). Then follows in ascending order based on the Cell Index an octet with the Type 1 PH field and an octet with the associated PCMAX,c (if reported),for each activated Serving Cell indicated in the bitmap.
The Extended Power Headroom MAC Control Element is defined as follows:
- Ci: this field indicates the activation/deactivation status of the SCell with Cell Index i as specified in [8]. The Ci field set to "1" indicates that a PH field for the SCell with Cell Index i is reported. The Ci field set to "0" indicates that a PH field for the SCell with Cell Index i is not reported;
- R: reserved bit, set to "0";
- V: this field indicates if the PH value is based on a real transmission or a reference format. For Type 1 PH, V=0 indicates real transmission on PUSCH and V=1 indicates that a PUSCH reference format was used. For Type 2 PH, V=0 indicates real transmission on PUCCH and V=1 indicates that a PUCCH reference format was used. Furthermore, for both Type 1 and Type 2 PH, V=0 indicates the presence of the associated PCMAX,c field, and V=1 indicates that the associated PCMAX,c field is omitted; **For Type 2 PH, V= 1 indicates that the corresponding PCMAX,c equals that of Type 1 PH for the PCell.**
- Power Headroom (PH): this field indicates the power headroom level. The length of the field is 6 bits. The reported PH and the corresponding power headroom levels are shown in Table 6.1.3.6-1 (the corresponding measured values in dB can be found in subclause 9.1.8.4 of [9]);
- PCMAX,c: if present, this field contains the PCMAX,c used for calculation of the preceding PH field.

### 5.4.6 Power Headroom Reporting

The Power Headroom reporting procedure is used to provide the serving eNB with information about the difference between the nominal UE maximum transmit power and the estimated power for UL-SCH transmission per activated Serving Cell and also with information about the difference between the nominal UE maximum power and the estimated power for UL-SCH and PUCCH transmission on PCell.
The reporting period, delay and mapping of Power Headroom are defined in subclause 9.1.8 of [9]. RRC controls Power Headroom reporting by configuring the two timers *periodicPHR-Timer* and *prohibitPHR-Timer*, and by signalling *dl-Pathloss*Change which sets the change in measured downlink pathloss to trigger a PHR [8].
A Power Headroom Report (PHR) shall be triggered if any of the following events occur:
- *prohibitPHR*-Timer expires or has expired and the path loss has changed more than *dl-PathlossChange* dB for at least one activated Serving Cell which is used as a pathloss reference since the last transmission of a PHR when UE has UL resources for new transmission;
- *periodicPHR-Timer expires*;
- upon configuration or reconfiguration of the power headroom reporting functionality by upper layers [8], which is not used to disable the function;
- activation of an SCell with configured uplink.

If the UE has UL resources allocated for new transmission for this TTI:
- if it is the first UL resource allocated for a new transmission since the last MAC reset, start *periodicPHR-Timer*;
- if the Power Headroom reporting procedure determines that at least one PHR has been triggered since the last transmission of a PHR or this is the first time that a PHR is triggered, and;
- if the allocated UL resources can accommodate a PHR MAC control element plus its subheader as a result of logical channel prioritization:
   - if *extendedPHR* is configured:
- for each activated Serving Cell with configured uplink:
   - obtain the value of the Type 1 power headroom;
   - if the UE has a valid grant for this Serving Cell for this TTI:
      - obtain the value of the corresponding PCMAX,c from the physical layer;
- if *simultaneousPUCCH-PUSCH* is configured:
   - obtain the value of the Type 2 power headroom for the PCell;
   - if the UE has a PUCCH transmission in this TTI:
      - **[FFS if only if different than PCMAX,c for Type 1 power headroom for the PCell]** obtain the value of the corresponding PCMAX,c from the physical layer;
   - instruct the Multiplexing and Assembly procedure to generate and transmit an Extended PHR MAC control element as defined in subclause 6.1.3.6a based on the values reported by the physical layer;
- else:
   - obtain the value of the Type 1 power headroom from the physical layer;
   - instruct the Multiplexing and Assembly procedure to generate and transmit a PHR MAC control element as defined in subclause 6.1.3.6 based on the value reported by the physical layer;
- start or restart *periodicPHR-Timer*;
- start or restart *prohibitPHR-Timer*;
- cancel all triggered PHR(s).

Accordingly, it can be seen that embodiments provide an efficient method for informing the corresponding P_{CMAX},_{C} for the Type 2 PH when there is no PUCCH transmission in the given TTI. The uplink resources are optimized. Embodiments reuse the already used field in the MAC format, hence the modification to the MAC format is avoided thus this results in less impact on the previous standards.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of encoding wireless telecommunication network control parameters in a control message for transmission from a first network node to a second network node, said control message containing a plurality of configuration reports, each configuration report containing at least one control parameter, said method comprising the steps of:
determining that a second configuration report containing a second control parameter can be used by said second network node to derive a first control parameter of a first configuration report;
omitting inclusion of said first control parameter in said first configuration report; and
encoding an indication in said first configuration report for said second network node to derive said first control parameter from said second control parameter.

2. The method of claim 1, wherein said step of determining comprises determining that said second control parameter is the same as said first control parameter; and
said step of encoding comprises encoding an indication in said second configuration report for said second network node to use said second control parameter as said first control parameter.

3. The method of claim 1 or 2, wherein said step of determining comprises determining that said second control parameter is derivable from parameters available to said second network node;
said step of omitting comprises omitting inclusion of said second control parameter in said second configuration report; and
said step of encoding comprises encoding an indication in said second configuration report for said second network node to derive said second control parameter from said parameters available to said second network node.

4. The method of any preceding claim, wherein said step of determining comprises determining that said second control parameter is derivable from parameters of a previously provided control message;
said step of omitting comprises omitting inclusion of said second control parameter in said second configuration report; and
said step of encoding comprises encoding an indication in said second configuration report for said second network node to derive said second control parameter from said parameters of said previously provided control message.

5. The method of any preceding claim, wherein said control message comprises a PHR MAC control element, said first configuration report comprises a Type 2 PHR report containing a first PHR parameter and a first Pcmax parameter and said second configuration report comprises a Type 1 PHR report containing a second PHR parameter and a second Pcmax parameter,
said step of determining comprises determining that said Type 1 PHR report contains an indication of said second Pcmax parameter which can be used to derive said first Pcmax parameter,
said step of omitting comprises omitting said first Pcmax parameter from said Type 2 PHR report, and
said step of encoding comprises encoding a bit field of said Type 2 PHR report to indicate to said second network node to derive said first Pcmax parameter from said second Pcmax parameter.

6. The method of claim 5, wherein said step of determining comprises determining that said Type 1 PHR report contains said second Pcmax parameter which the same as said first Pcmax parameter, and
said step of encoding comprises encoding a bit field of said Type 2 PHR report to indicate to said second network node to use said second Pcmax parameter as said first Pcmax parameter.

7. The method of claim 5 or 6, wherein said step of determining comprises determining that said Type 1 PHR report contains an indication that said second Pcmax parameter is derivable from parameters available to said second network node,
said step of omitting comprises omitting said second Pcmax parameter from said Type 1 PHR report, and
said step of encoding comprises encoding a bit field of said Type 1 PHR report to indicate to said second network node to derive said second Pcmax parameter from said parameters available to said second network node.

8. The method of any one of claims 5 to 7, wherein said step of determining comprises determining that said second Pcmax parameter is derivable from parameters of a previously provided PHR MAC control element;
said step of omitting comprises omitting inclusion of said second Pcmax parameter in said Type 1 PHR report; and
said step of encoding comprises encoding an indication in said Type 1 PHR report for said second network node to derive said second Pcmax parameter from said parameters of said previously provided PHR MAC control element.

9. A computer program product operable, when executed on a computer, to perform the method steps of any one of claims 1 to 8.

10. A network node operable to encode wireless telecommunication network control parameters in a control message for transmission to another network node, said control message containing a plurality of configuration reports, each configuration report containing at least one control parameter, said network node comprising:
determining logic operable to determine that a second configuration report containing a second control parameter can be used by said another network node to derive a first control parameter of a first configuration report;
encoding logic operable to omit inclusion of said first control parameter in said first configuration report and to encode an indication in said first configuration report for said another network node to derive said first control parameter from said second control parameter.

11. A method of decoding wireless telecommunication network control parameters in a control message received at a second network node from a first network node, said control message containing a plurality of configuration reports, each configuration report containing at least one control parameter, said method comprising the steps of:
decoding an indication in a first configuration report of said control message to derive a first control parameter from a second control parameter of a second configuration report of said control message; and
deriving said first control parameter from said second control parameter.

12. A computer program product operable, when executed on a computer, to perform the method steps of claim 11.

13. A network node operable to decode wireless telecommunication network control parameters in a control message received from another network node, said control message containing a plurality of configuration reports, each configuration report containing at least one control parameter, said network node comprising:
decoding logic operable to decode an indication in a first configuration report of said control message to derive a first control parameter from a second control parameter of a second configuration report of said control message; and
deriving logic operable to derive said first control parameter from said second control parameter.
